# EUROPEAN PATENT SPECIFICATION

(11) **EP 4 229 708 B1**
(45) Date of publication and mention of the grant of the patent: **15.04.2026**
(21) Application number: 22825719.2
(22) Date of filing: 15.06.2022
(51) Int. Cl.: H01M 10/657, B60L 3/00, B60L 50/64, G01R 31/36, H01M 10/44, H01M 10/65, H01M 10/052, H01M 10/42, H01M 10/48, H01M 10/615, H01M 50/581, H01M 10/6571, H01M 10/637, H01M 10/63, H01M 10/625, H01M 10/0525, H01M 50/574

(54) **SYSTEMS AND METHODS FOR MECHANICAL PREVENTION OF THERMAL RUNAWAY PROPAGATION**
SYSTEME UND VERFAHREN ZUR MECHANISCHEN PRÄVENTION DER AUSBREITUNG VON THERMISCHEM DURCHGEHEN
SYSTÈMES ET PROCÉDÉS DE PRÉVENTION MÉCANIQUE DE PROPAGATION D'EMBALLEMENT THERMIQUE

(30) Priority: 18.06.2021 US 202163212478 P
(43) Date of publication of application: 23.08.2023
(73) Proprietor: Electric Power Systems, Inc., North Logan, Utah 84341 (US)
(72) Inventor: DUNN, Randy, Orange, California 92869 (US); BANWELL, James, Montclair, California 91711 (US)
(74) Representative: Thurston, Joanna
(86) International application number: PCT/US2022/033529
(87) International publication number: WO 2022/266166

(56) References cited:
- US-A1- 2004 004 464
- US-A1- 2007 054 157
- US-A1- 2007 054 157
- US-A1- 2014 241 394
- US-A1- 2014 241 394
- US-A1- 2016 059 732
- US-A1- 2018 267 108
- US-A1- 2020 036 068
- US-B1- 6 531 847

## Description

### FIELD OF INVENTION

The present disclosure generally relates to systems and methods for mechanical prevention of thermal runaway propagation.

### BACKGROUND OF THE INVENTION

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches, which in and of themselves may be inventions.

A battery module, for purposes of this disclosure, includes a plurality of electrically connected cells. These cells may, in turn, include a parallel, series, or combination of both, collection of electrochemical or electrostatic cells hereafter referred to collectively as "cells", that can be charged electrically to provide a static potential for power or released electrical charge when needed. When cells are assembled into a battery module, the cells are often linked together through metal strips, straps, wires, bus bars, etc., that are welded, soldered, or otherwise fastened to each cell to link them together in the desired configuration.

A cell may be comprised of at least one positive electrode and at least one negative electrode. One common form of such a cell is the well-known secondary cells packaged in a cylindrical metal can, a pouch cell, or in a prismatic case. Examples of chemistry used in such secondary cells are Lithium Titanate Oxide (LTO), lithium cobalt oxide, lithium manganese, lithium iron phosphate, nickel cadmium, nickel zinc, and nickel metal hydride. Such cells are mass produced, driven for example by an ever-increasing consumer market that demands low cost rechargeable energy for portable electronics, electric vehicles, and stationary energy storage.

Thermal runaway describes a process that may occur in a cell of a battery module that is accelerated by increased temperature, in turn releasing energy that further increases temperature. Thus, once a cell reaches some temperature level, the cell may go into thermal runaway. That temperature level is typically a "high" temperature and is often dependent on the chemistry of the cell. US 2004/0004464 (Tsukamoto et al.) describes an emergency energy discharge system for preventing thermal runaway in energy storage devices.

### SUMMARY

A method of validating a battery module for flight is disclosed herein. In various embodiments, the method comprises: coupling an external heating source to the battery module, the battery module including a plurality of cells; gradually applying heat to the battery module via the external heating source, wherein a cell in the plurality of cells that exceeds a temperature threshold is rapidly discharged to a state-of-charge between 0% and 25%; and verifying no fragments and no flames are released outside the battery module.

In various embodiments, all external safety devices are disconnected from the cell before applying heat to the cell.

In various embodiments, the cell is rapidly discharged to the state-of-charge between 0% and 15% in response to the temperature threshold being exceeded. The cell can be rapidly discharged to the state-of-charge between 0% and 5% in response to the temperature threshold being exceeded.

In various embodiments, each cell in the plurality of cells that exceeds the temperature threshold is rapidly discharged to the state-of-charge between 0% and 25%. In response to the plurality of cells discharging to the state-of-charge between 0% and 25%, an inert moat of battery cells in the plurality of cells is created.

A battery module is disclosed herein. In various embodiments, the battery module comprises a plurality of cells, each cell of the plurality of cells comprising a passive control system having a control block and a load resistor, the passive control system fixedly connected to the respective cell and configured to discharge the cell to the load resistor in response to an external source of heat being applied to the cell that causes a temperature of the passive control system to exceed a threshold temperature, so as to reduce a state-of-charge of the respective cell to less than 25%, wherein the passive control system comprises a thermal switch or a mechanical switch.

In various embodiments, all external safety systems are disconnected from the battery module.

In various embodiments, an external application of heat will not trigger a thermal runaway event.

In various embodiments, adjacent cells, that are adjacent to a passively protected cell, are protected by reducing the state-of-charge of the passively protected cell to less than 10% state-of-charge.

In various embodiments, at least one of the following: passive protection from the passive control system is not from a control module or battery management system, is not provided by any system remote from the cell, and is provided on a one-to-one basis between the thermal switch and the cell, does not discharge a whole module but rather discharges individual cells, does not monitor any signals, is not provided by digital means, sensors that generate signals, Field Effect Transistors or any digital switches, without a central controller, and does not comprise a shutdown separator.

In various embodiments, the passive control system is configured to discharge energy in the cell when the cell reaches the threshold temperature.

In various embodiments, the passive control system is configured to discharge energy in the cell to reduce chance of thermal runaway in adjacent cells due to heat from the cell.

In various embodiments, the passive control system is configured to reduce an exothermic reaction by rapidly discharging the cell.

A method of protecting adjacent cells from a thermal runaway event in a cell that is adjacent to the adjacent cells is disclosed herein. In various embodiments, the method comprises: switching a thermal switch from a first position to a second position in response to a temperature of the thermal switch being greater than a threshold temperature, the cell comprising the thermal switch and a resistive load; and rapidly discharging power in the cell to the resistive load in response to switching the thermal switch from the first position to the second position.

In various embodiments, rapidly discharging the cell takes the cell from its current state-of-charge to a predetermined state-of-charge. The predetermined state-of-charge can be less than 25%. The predetermined state-of-charge can be less than 5%.

In various embodiments, the thermal switch is integral with the cell.

In various embodiments, the thermal switch is passive, mechanical, and requires no signal input or external control to switch to cause the discharge.

### BRIEF DESCRIPTION OF THE DRAWINGS

A more complete understanding of the present disclosure may be derived by referring to the detailed description and claims when considered in connection with the Figures, wherein like reference numbers refer to similar elements throughout the Figures, and where:
**Figure 1** illustrates a method of validating a battery module for aircraft use, in accordance with various embodiments;
**Figure 2A** illustrates a temperature cycle of a cell for a battery at 100% state-of-charge, in accordance with various embodiments;
**Figure 2B** illustrates a temperature cycle of a cell for a battery discharged to 50% state-of-charge at 80 °C, in accordance with various embodiments;
**Figure 2C** illustrates a temperature cycle of a cell for a battery discharged to 25% state-of-charge at 80 °C, in accordance with various embodiments;
**Figure 2D** illustrates a temperature cycle of a cell for a battery discharged to 10% state-of-charge at 80 °C, in accordance with various embodiments;
**Figure 2E** illustrates a temperature cycle of a cell for a battery discharged to approximately 0% state-of-charge at 80 °C, in accordance with various embodiments;
**Figure 2F** illustrates an over lay of the temperature cycles of Figures 2A-2E, in accordance with various embodiments;
**Figure 2G** illustrates an over lay of the temperature cycles of Figures 2A-2E with the heat source contribution removed, in accordance with various embodiments;
**Figure 3** illustrates a temperature cycle of a cell for a battery module, in accordance with various embodiments;
**Figure 4A** illustrates a perspective exploded view of a cell assembly for a battery module, in accordance with various embodiments;
**Figure 4B** illustrates a perspective view of a cell assembly for a battery module, in accordance with various embodiments;
**Figure 5A** illustrates a cross-sectional view of a cell for a battery module, in accordance with various embodiments;
**Figure 5B** illustrates a cross-sectional view of a cell for a battery module, in accordance with various embodiments;
**Figure 5C** illustrates a cross-sectional view of a cell for a battery module, in accordance with various embodiments;
**Figure 6** illustrates a perspective view of a battery module, in accordance with various embodiments;
**Figure 7A** illustrates a side view of a cell for a battery module, in accordance with various embodiments;
**Figure 7B** illustrates a schematic view of a cell for a battery module, in accordance with various embodiments;
**Figure 8A** illustrates a perspective front view of a cell for a battery module, in accordance with various embodiments;
**Figure 8B** illustrates a perspective back view of a cell for a battery module, in accordance with various embodiments;
**Figure 9A** illustrates a perspective front view of a cell for a battery module, in accordance with various embodiments;
**Figure 9B** illustrates a perspective back view of a cell for a battery module, in accordance with various embodiments;
**Figure 10A** illustrates a front view of a cell for a battery module, in accordance with various embodiments;
**Figure 10B** illustrates a perspective view of a cell for a battery module, in accordance with various embodiments; and
**Figure 11** illustrates a schematic view of an electrically powered aircraft with a battery system, in accordance with various embodiments.

### DETAILED DESCRIPTION

The following description is of various example embodiments only, and is not intended to limit the scope, applicability or configuration of the present disclosure in any way. Rather, the following description is intended to provide a convenient illustration for implementing various embodiments including the best mode. As will become apparent, various changes may be made in the function and arrangement of the elements described in these embodiments, without departing from the scope of the appended claims. For example, the steps recited in any of the method or process descriptions may be executed in any order and are not necessarily limited to the order presented. Moreover, many of the manufacturing functions or steps may be outsourced to or performed by one or more third parties. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. As used herein, the terms "coupled," "coupling," or any other variation thereof, are intended to cover a physical connection, an electrical connection, a magnetic connection, an optical connection, a communicative connection, a functional connection, and/or any other connection.

For the sake of brevity, conventional techniques for mechanical system construction, management, operation, measurement, optimization, and/or control, as well as conventional techniques for mechanical power transfer, modulation, control, and/or use, may not be described in detail herein. Furthermore, the connecting lines shown in various figures contained herein are intended to represent example functional relationships and/or physical couplings between various elements. It should be noted that many alternative or additional functional relationships or physical connections may be present in a modular structure.

Thermal runaway is a significant safety issue in the lithium-ion battery industry and a large variety of solutions have been proposed or implemented to attempt to address the safety issues. A number of situations can cause or contribute to thermal runaway. Thermal runaway can occur in the event of overcharging of a battery cell, as a result of deep discharge of a battery cell during the subsequent charging process or in the presence of inadmissibly high charging and discharging currents of the battery cell, which can arise, for example, from an external short circuit. Furthermore, thermal runaway can also occur if there is a short circuit inside the battery cell, which can arise, for example, as a result of a strong mechanical force during an accident or as a result of the formation of dendrites inside the battery cell, which can occur, for example, when there are excessive charging currents at low temperatures. Furthermore, thermal runaway can also occur as a result of short circuits inside the battery cells, which can be caused by contamination of the battery cells occurring during manufacture, in particular by metallic foreign particles present in the battery cells.

But importantly, thermal runaway can also occur in the presence of impermissible heating of the battery cells, which can arise, for example, as a result of a vehicle fire, if the battery cells are overloaded, or in the event that once cell catches fire. Regardless of how the thermal runaway may be triggered in a cell, it is important that the thermal runaway not spread to neighboring cells, compounding the thermal event. Thus, it is desirable that devices, systems and methods be devised that prevent thermal runaway in cells that are externally heated. Moreover, it is desirable that devices, systems and methods be devised that prevent a cascade effect initiated from an initial thermal event.

In various embodiments, battery modules as disclosed herein may be configured for battery systems integrated into aircraft applications. Aviation is held to a higher standard compared to typical battery systems (e.g., ground transportation battery systems, such as cars, trucks, etc.). In particular, in order to meet standards for flight, a battery module must pass certain safety tests related to, the following conditions: (1) short circuits; (2) overcharge; and (3) external heat source. Short circuits are often addressed by fusible links. Overcharge is typically protected with a circuit interrupt device (CID) integrated into the cell. However, fuses and CIDs do not protect against a cell being exposed to an external heating source that is continuously increasing in temperature.

Thus, perhaps the most difficult test for battery modules to pass to be considered safe for aviation is the test of applying the external heat source. In this test, an external heat source is applied to the battery (i.e., a battery module or pack as described further herein) in incremental temperature steps and the temperature is increased until the battery module catches fire. For all of these aviation tests, all external circuits, such as external CID's, are required to be disabled prior to the testing. Moreover, the tests currently require that any protective and safety features of the battery module cannot be triggered by a controller or other electronics.

In an example embodiment, two tests that must be passed in order to deploy batteries onto commercial or military aircraft, respectively, are DO311A and NAVSEA.

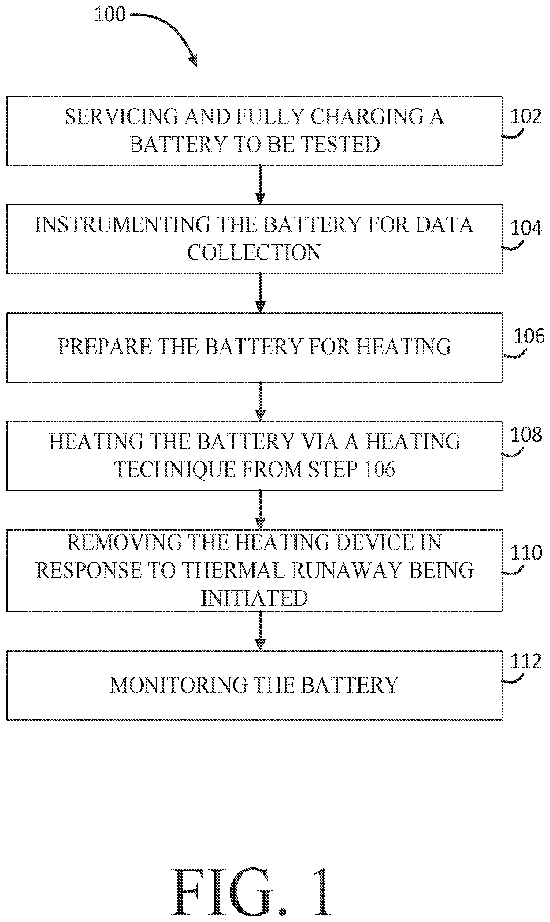

Referring now to FIG. 1, a method of testing a battery module, having a plurality of cells, for overheating in accordance with test (3) outlined above is illustrated, in accordance with various embodiments. The method 100 comprises servicing and fully charging a battery in accordance with manufacturer instructions (step 102). The method 100 further comprises instrumenting the battery to measure the temperature of at least two cells, a temperature of the external surface of the battery, and a temperature of any gases that exit the battery (step 104). Moreover, the method 100 may comprise any suitable system for heating the battery, with or without temperature sensor(s). In one example embodiment, the test may simply continue to increase the heating of the battery module until one or more cells initiate thermal runaway.

The method 100 further comprises preparing the battery module for heating (step 106). In this regard, the heating may be performed by one of the following techniques to accomplish overheating due to an external heat source: (1) install one or more heating devices inside the battery module to heat all cells; (2) surround the battery module with a heating device (e.g., a thermal blanket or the like); or (3) place the battery module in a temperature chamber that will act as the heating device. The first technique above may be utilized for battery modules that have space within the battery module; however, it is beneficial to optimize space within a battery module for cost, weight, and size purposes, in accordance with various embodiments. Thus, techniques (2) or (3) appear more likely to be utilized for step 106 of testing process 100, in accordance with various embodiments. The heating technique may be sufficient to heat the battery module in its entirety at an average rate of between 5 and 20 °C per minute at the external surface of the heated cells for technique (1), at the external surface of the battery for technique (2), or for the chamber temperature for technique (3). Moreover, any suitable technique for heating the battery may be used to perform the external heating of the battery test.

The method 100 further comprises activating the heating device (step 110). In this regard, the heating device begins to heat the cell at an average rate of between 5 and 20 °C per minute.

The method 100 further comprises removing power to the heating device in response to a thermal runaway event initiating (step 110). It is noted, here, that although the DO311A specification allows removing the heating device once thermal runaway has been initiated, and it would be somewhat useless to continue heating in this test, the removing power to the heating device (step 110) is not required. Thus, although for purposes of testing, the heater can be turned off after the thermal runaway event is started, in accordance with various testing protocols, the heating device could remain engaged to continue heating the battery even through the thermal runaway event. The method 100 further comprises monitoring the battery for a period of time (e.g. for 16 hours) after the power of the heating device has been removed / after the thermal runaway event has been initiated (step 112).

A battery module is considered to have passed the thermal runaway via overheating containment test (i.e., testing process 100) if (a) no release of fragments occurs outside of the battery system, (b) no flames escape outside of the battery system, except through the designed venting provisions, and (c) escape of emissions must meet design standard (i.e., no emissions, emissions allowed to escape only through one or more designed vents that provide a sealed connect to an aircraft exhaust system, or emissions are allowed to escape from the battery system without designed venting provisions that provide a seal to the aircraft exhaust system). Thus, in accordance with various example embodiments, a battery as disclosed herein is configured to be capable of passing the overheating tests outlined in method 100 above. In this regard, in response to a cell, or a plurality of cells, in a battery system being externally heated in accordance with step 110 above, fragments will not be released outside of the battery system, flames will not escape the battery system, and any exhaust from the event will be properly vented.

Stated another way, in a first example embodiment, the heating test comprises heating the entire battery module, and the battery module passes the externally applied heating test if it just smolders, but does not go into thermal runaway. Moreover, in this first example embodiment, the battery module may be configured to prevent the cascading of a thermal runaway event in one cell to an adjacent cell.

In a second example embodiment, the heating test comprises heating a single cell, and the cell passes the test if it just smolders, but does not go into thermal runaway. In this example, the system is configured to moderate the single cell reaction through the prior discharge of energy, thus moderating the single cell reaction. However, here, even if a single cell goes into thermal runaway, the battery module may be configured to prevent the cascading of the thermal runaway event from that cell to an adjacent cell and thus significantly moderating the whole pack response to the test.

Whether the temperature of a cell during an exothermic reaction is correlated to a state-of-charge of the cell has not been tested by academia or industry. In accordance with an example embodiment, the energy released during a thermal runaway event of a lithium ion cell is correlated (i.e., directly related) to a state-of charge of that cell at the time of the event, such that the exothermic reaction may be better controlled in response to an external heat source test as outlined above, by automatically, via mechanical means, discharging a cell in response to a cell exceeding a pre-determined temperature threshold. In an example embodiment, the cell is discharged to a zero state-of-charge, or to a near zero state-of-charge, in response to exceeding a pre-determined temperature threshold.

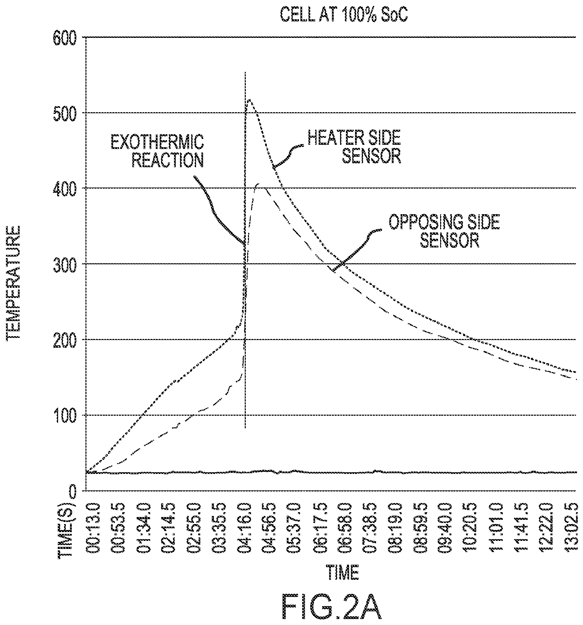

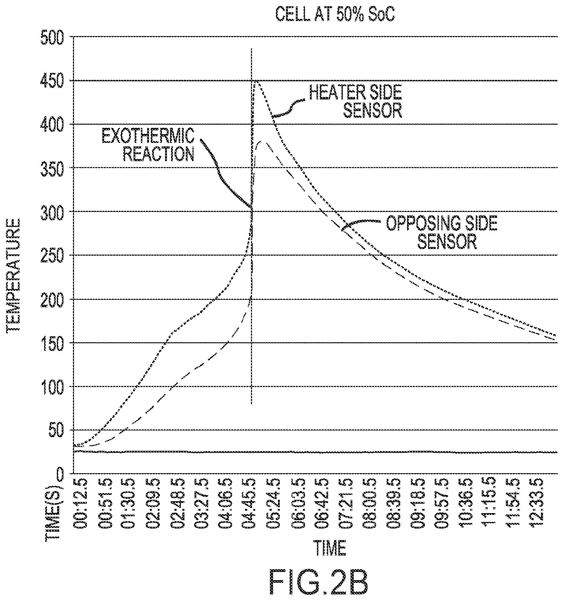

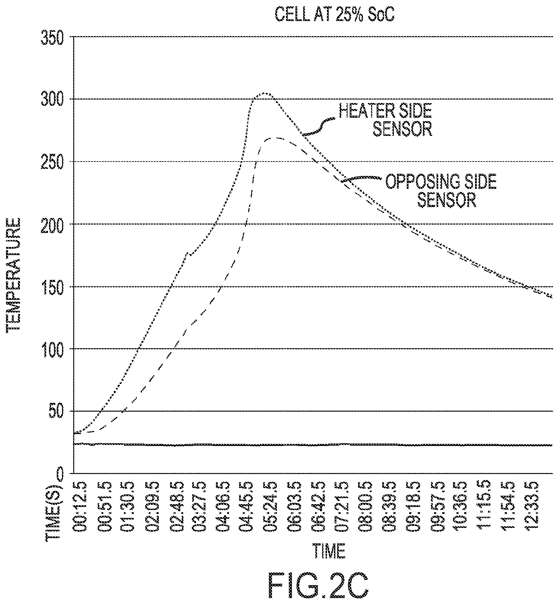

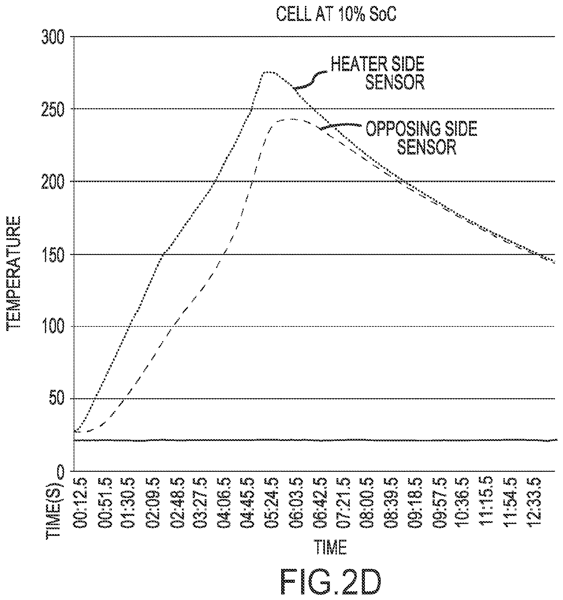

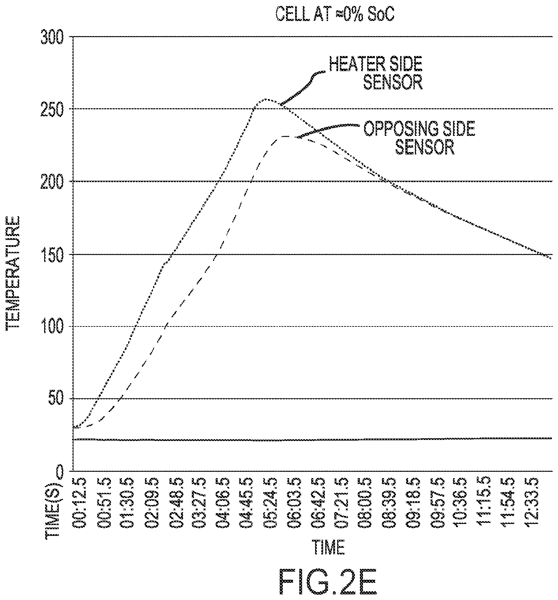

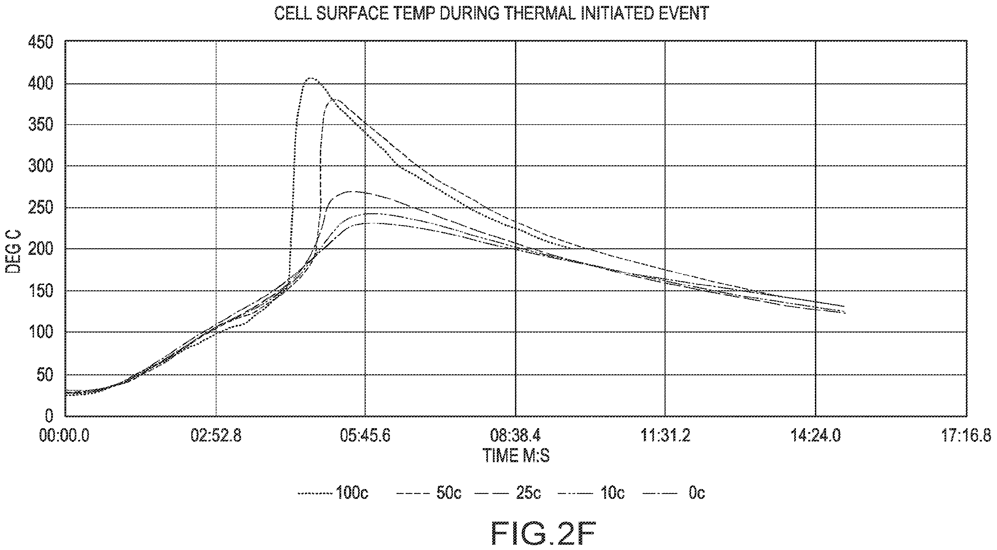

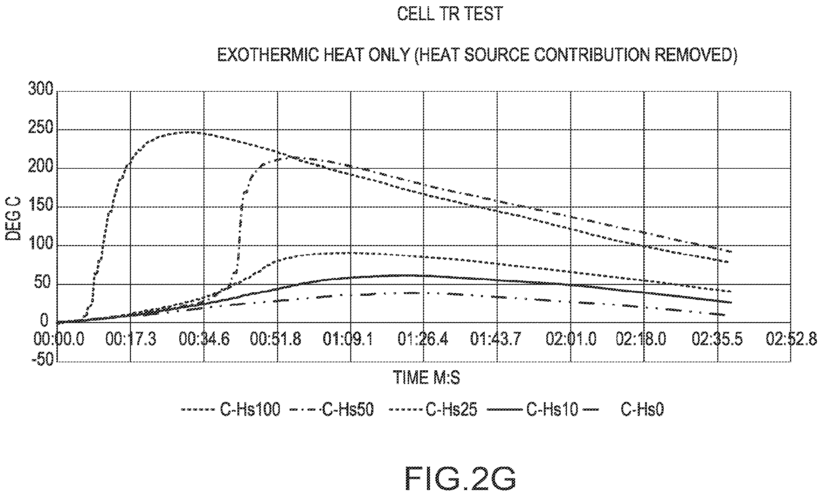

To test the hypothesis that state-of-charge and a corresponding exothermic reaction were related, several tests were performed: (1) a cell was heated about 5 - 10 °C per minute in accordance with test method 100 from FIG. 1 with the cell having a full state-of-charge (i.e., 100% state-of-charge) (FIG. 2A); (2) a cell was heated about 5-10 °C per minute in accordance with test method 100 from FIG. 1 with the cell at a 50% state-of-charge (FIG. 2B), a 25% state-of-charge (FIG. 2C), a 10% state-of-charge (FIG. 2D), and an approximately 0% state-of-charge (FIG. 2E) after the cell reached a temperature of about 80 °C. The results of each test can be seen in FIGs. 2A-E, as well as an overlay of the test results can be seen in FIG. 2F and in FIG. 2G (with the heat source removed).

As illustrated in FIG. 2A, the first test (FIG. 2A) and the second test (FIG. 2B) illustrated a cell entering thermal runaway in a typical manner, after heating by way of the external heat source to around 200 °C the thermal plot exhibits a rapid increase to greater than 500 °C on both sides of the cell for the 100% state-of-charge case (fig. 2a) and to approximate 450 °C in the 50% state-of-charge case (FIG. 2B) This is the characteristic signature of a lithium battery exothermic reaction event.

In contrast to the 100% state-of-charge case (FIG. 2A) and the 50% state-of-charge case (FIG. 2B), a mostly discharged cell of FIG. 2C (25% state-of-charge), FIG. 2D (10% state-of-charge) and FIG. 2E (approximately 0% state-of-charge) exhibited very little exothermic reaction by comparison. In particular, the temperature vs. time plots for FIGs. 2C-2E do not exhibit a near instantaneous rise in temperature as shown in FIGs. 2A, 2B (i.e., FIGs. 2C-2E cases have little to no exothermic reaction relative to FIGs. 2A-B cases). Further, cells discharged to 25% state-of-charge or less exhibited no exothermic reaction at all, as exhibited by a relatively consistent temperature gradient from the heater side of the cell to the opposing side of the cell. In this regard, both exothermic reactions and maximum temperature of a cell during thermal runaway are a function of state-of-charge of a cell. Thus, in an example embodiment, each cell of a battery is designed with a mechanism configured to discharge the respective cell to a state-of-charge of 25% or less, or at least below a predetermined state-of-charge in response to exceeding a predetermined temperature threshold so as to facilitate meeting the safety requirement for passing testing method 100 from FIG. 1.

In an example embodiment, the discharge need not be to zero or near zero state-of-charge. For example, it may be sufficient to discharge the battery to 25% SOC or the like, and still obtain the benefit of preventing an exothermic reaction based on the external heating of the cell. Moreover, it is noted that it is quicker to discharge to 25% SOC than to 0% SOC, and therefore, the ability to pass the safety test by discharging to some SOC as high as 25% or the like, means that the cell / pack can be rendered safe from thermal runaway in a shorter period of time (faster) than if the cell / pack had to be discharged to 0%. Additionally, in an example embodiment, the systems, methods and devices disclosed herein are configured to delay the onset of thermal runaway (exothermic reaction). The delay can be approximately 30 seconds as can be seen in Fig. 2F, merely by discharging the cell from 100% SOC to 50% SOC. And the amount of delay can be related to the amount of discharge of the cell (where the amount of delay is inversely related to the SOC of the cell), up and to the point that the delay becomes infinite. Thus, disclosed herein is a system, method and device for both reducing and delaying exothermic reaction due to external heating of a cell, all the way up to completely reducing and indefinitely delaying the exothermic reaction with sufficient discharge of the cell.

In various embodiments, the difference between a cell in a battery module having a temperature cycle of FIG. 2A or 2B during method 100 from FIG. 1 compared to having a temperature cycle of FIG. 2C, 2D, or FIG. 2E during method 100 is significant since an exothermic reaction may be mitigated altogether. In this regard, the fast discharge of the cell after the threshold temperature is reached may exhaust the cell so that it may no longer be ignited as it is in FIGs. 2A-B. In this regard, the cell may be prevented from going into thermal runaway, or at the very least may minimize exothermic reaction of the cell from the thermal runaway event based on the rapid discharge. "Minimize" as described herein refers to reducing an exothermic reaction relative to a cell at 100% state-of-charge by at least 50% as illustrated in FIG. 2F, in accordance with various embodiments. In accordance with an example embodiment, for every unit of energy that is electrically removed from a cell in this manner, two units of heat energy is mitigated from the thermal runaway event, until both reach zero in response to the cell being electrically exhausted.

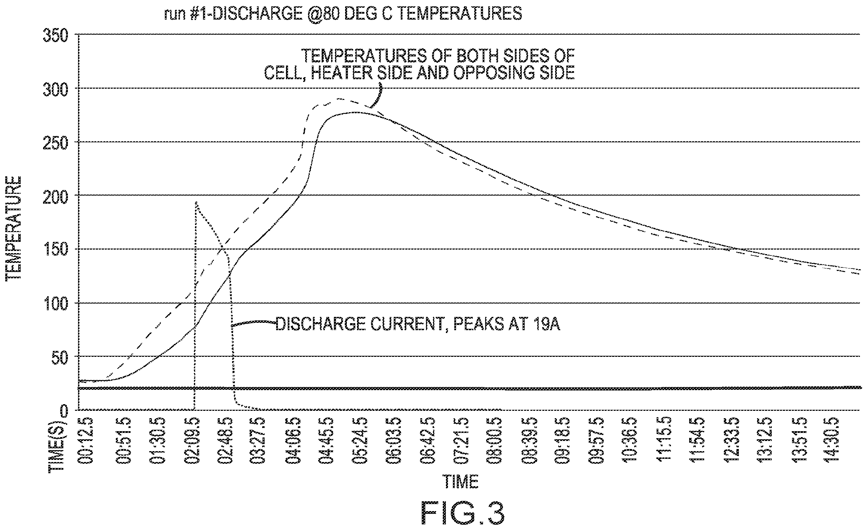

Thus, to mitigate or prevent thermal runaway, in accordance with an example embodiment, a battery module is configured to rapidly discharge a cell when a predetermined temperature threshold is reached. With reference now to Figure 3, in an example embodiment, process of mitigating an exothermic reaction due to an external heat source is illustrated, in accordance with various embodiments. As described further herein, a cell at 100% SOC is heated via an external device in accordance with step 108 of method 100. Then, in response to the cell exceeding a predetermined threshold (e.g., 80 °C in FIG. 3), the cell is discharged to a state-of-charge below 25% (e.g., approximately 0% in FIG. 3). In response to the cell being discharged from 100% to below 25% state-of-charge, an exothermic reaction (as illustrated in FIGs. 2A and 2B is mitigated and/or eliminated), in accordance with various embodiments. As shown, a side proximal the external heating device and a side distal to the external heating device are shown. This illustrates the effectiveness of the exothermic reaction prevention/mitigation systems, methods and devices disclosed herein.

Disclosed herein is a battery module having a plurality of cells configured to meet standards for flight disclosed previously herein. In this regard, each cell in the plurality of cells may comprise a controllerless, mechanically triggered protection system. For example, each cell in the plurality of cells may comprise a thermal fuse, or thermal switch, configured to trigger a discharge of the cell in response to the cell exceeding a predetermined temperature threshold. In various embodiments, the predetermined temperature threshold may be between 50 °C (122 °F) and 150 °C, or more preferably between 65 °C (149 °F) and 120 °C (248 °F), or more preferably between 70 °C (158 °F) and 90 °C (194 °F). In one example embodiment, the temperature threshold is 80 °C (176 °F). The predetermined temperature threshold may, in various example embodiments, be dependent on the chemistry of the cell(s), where some cells are more tolerant of heat than others. The predetermined temperature threshold may, in various example embodiments, be dependent on the situation in which the cell exists or is operated. For example if a cell(s) is expected to be cold due to the environment or operating condition, but in fact is hotter than expected, it may be appropriate to set/adjust the predetermined threshold lower than it would otherwise be set initially.

In various embodiments, each cell disclosed herein refers to a lithium-ion cell. Moreover, the cell, in various example embodiments, may comprise any chemistry cell that is susceptible to thermal runaway. In an example embodiment, the cell may comprise a cylindrical cell, a pouch cell, a prismatic cell, or the like. Moreover, this disclosure may apply to any suitable form factor for the cell or for the lithium-ion cell. A cell, as disclosed herein, refers to an anode cathode stack-up, a heat-sealed bag surrounding the anode cathode stack-up, and any other components disposed within the heat-sealed bag, in accordance with various embodiments. In various embodiments, a thermal fuse / thermal switch is built into, or integral with, the cell. In various embodiments, the thermal fuse / thermal switch may be disposed within the heat-sealed bag.

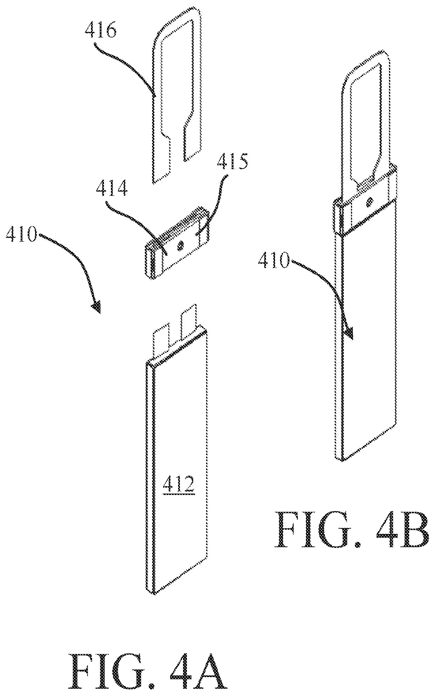

Referring now to FIGs. 4A and 4B, a perspective exploded view (FIG. 4A) and a perspective assembled view (FIG. 4B) of a portion of a cell 410 are illustrated, in accordance with various embodiments. The portion of the cell 410 may be configured to be disposed within a heat-sealed bag to form a pouch cell, in accordance with various embodiments as described further herein. The cell 410 comprises an anode-cathode stack 412, a passive control system 414, and a load resistor 416. In various embodiments, the anode-cathode stack 412 includes an anode, a cathode, and a separator disposed therebetween. In various embodiments, the load resistor 416 is configured to fully discharge the anode-cathode stack 412 in a predetermined amount of time. For example, the predetermined amount of time may be between 30 seconds and 3 minutes, or between 60 seconds and 2 minutes, or between 90 and 100 seconds, in accordance with various embodiments. In various embodiments, the load resistor 416 may comprise a nickel-chromium alloy (nichrome) wire, or the like. The nichrome wire is significantly lighter than typical load resistors and is configured to discharge a significant portion of its heat through radiation, as opposed to just through convection / conduction, which may be beneficial to the systems and methods disclosed herein, in accordance with various embodiments. In accordance with other example embodiments, the load resistor material is stainless steel wire, or a conventional aluminum-housed or silicone coated wire wound type load resistor.

In various embodiments, the passive control system 414 comprises a control block 415. The control block 415 is adaptable to be coupled to an anode-cathode stack 412. Although cell 410 is illustrated as a pouch cell, the present disclosure is not limited in this regard. For example, anode-cathode stack 412 may comprise a prismatic cell, a cylindrical cell, or the like and still be within the scope of this disclosure, as described further herein.

In various embodiments, the load resistor 416 is isolated thermally from the anode-cathode stack 412 via the control block 415. In this regard, during the rapid discharge phase, in response to the passive control system 414 being activated, the heat generated by the load resistor 416 from the rapid discharging of the anode-cathode stack 412 through the load resistor 416 may have little to no contribution to the heating of the anode-cathode stack 412 from the external heat source and/or the beginning of the thermal runaway event.

In various embodiments, the control block 415 comprises fusible links and/or a thermal switch disposed therein. In various embodiments, the thermal switch is configured to close in response to exceeding a predetermined temperature. The predetermined temperature may between 50 °C (122 °F) and 150 °C, or more preferably between 65 °C (149 °F) and 120 °C (248 °F), or more preferably between 70 °C (158 °F) and 90 °C (194 °F). In one example embodiment, the temperature threshold is 80 °C (176 °F). In response to the thermal switch closing, the anode-cathode stack 412 may become in electrical communication with the load resistor 416. In this regard, in response to the thermal switch closing, the load resistor 416 may fully discharge the anode-cathode stack 412 in the predetermined amount of time previously disclosed herein.

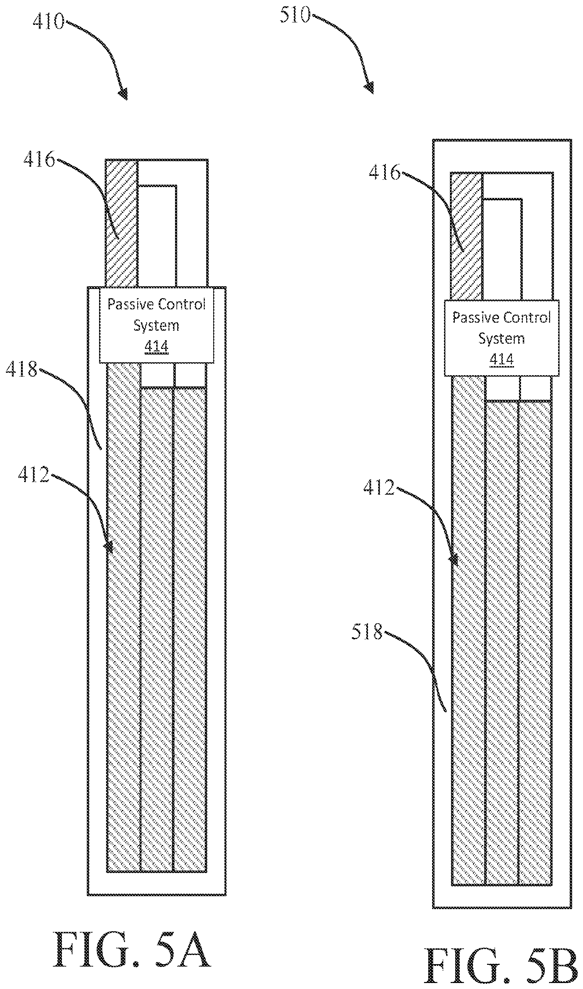

Referring now to FIG. 5A, a cross-sectional view of the cell 410 is illustrated, in accordance with various embodiments. In various embodiments, the cell 410 further comprises a cell housing 418. The cell housing 418 may comprise a pouch housing, a cylindrical housing, a prismatic housing or the like. In various embodiments, the passive control system 414 is disposed within the cell housing 418. In this regard, the passive control system 414 may be considered integral with the cell 410 and be able to remain as is during testing process 100 from FIG. 1.

Referring now to FIG. 5B, a cross-sectional view of a cell 510 in accordance with various embodiments, is illustrated, in accordance with various embodiments. The cell 510 includes a cell housing 518 that contains the load resistor 416, the passive control system 414 and the anode-cathode stack 412. In this regard, the passive control system 414 may be considered integral with the cell 510 and be able to remain as is during testing process 100 from FIG. 1. In various embodiments, the cell 410 may be more preferable than cell 510 because the cell 410 may be lighter due to having less of the cell housing 418 relative to cell housing 518 and/or the load resistor 416 is disposed external to the cell housing 418, which will facilitate greater thermal management during testing process 100 relative to the cell housing 518, which contains the load resistor 416 within the housing.

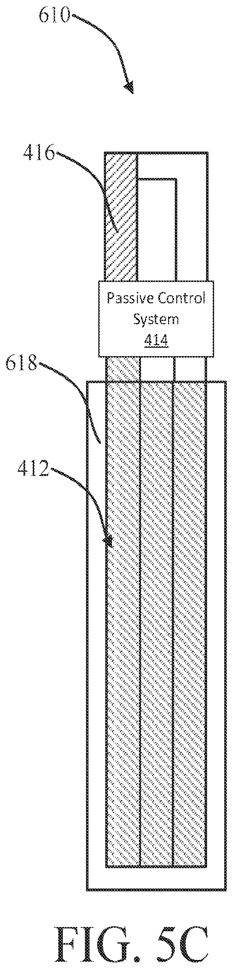

Referring now to FIG. 5C, a cross-sectional view of a cell 610 is illustrated in accordance with various embodiments. In various embodiments, a cell housing 618 may contain only the anode-cathode stack 412 and not the passive control system 414 or the load resistor 416. In this regard, cell 610 may be the lightest and most cost effective option. According to current testing procedures, not having the passive control system 414 within the cell housing 618 may cause the passive control system to be disabled during testing process 100 from FIG. 1. However, it is anticipated that providing the passive control system 414 external to the cell housing 618 may be a useful embodiment depending on test requirements.

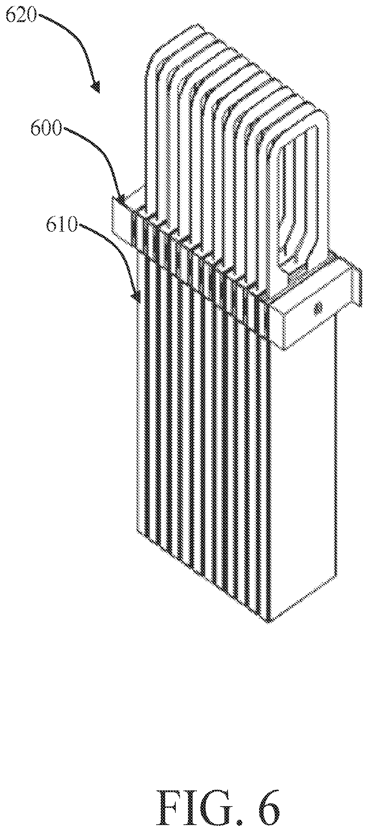

With reference now to FIG. 6, a plurality of the cell 610 may be electrically coupled together to form a battery module 600. In various embodiments, each cell in the battery module 600 is in accordance with the cell 610. In this regard, each and every cell in the battery module 400 may comprise the passive control system 414 having the control block 415 and the load resistor 416. Although described herein with respect to cell 610, battery module 600 could also include the cell 510 or the cell 410, in accordance with various embodiments. By having a one to one ratio of anode-cathode stack 412 to passive control system 414, each cell 610 in the battery module 600 is configured to rapidly discharge in response to that specific cell exceeding a predetermined temperature threshold. In accordance with another example embodiment, a portion of the cells in the battery module 600 may comprise the passive control system 414 having the control block 415 and the load resistor 416. In this example partial system, the passively protected cells may be located between unprotected cells, serving as a buffer to a thermal event. Moreover, in an example embodiment, patterns of passively protected cells may be located amongst unprotected cells to slow or stop a thermal event spreading through the battery module 600. As illustrated in FIGs. 3, in doing so, an exothermic reaction of respective cell(s) may be eliminated or greatly reduced relative to a cell that maintains its state-of-charge while being heated from an external source in accordance with step 110 of method 100 from FIG. 1. Moreover, the exothermic reaction of a passively protected cell may protect the cell and neighboring cells from a cascading and compounding thermal event triggered by cascading external heat.

In various embodiments, the passive control system 414 for each anode-cathode stack 412 in the battery module 600 is configured to discharge energy in the anode-cathode stack 412 only and not the energy of any additional cells in the battery module 400. In this regard, by reducing the temperature of the exothermic reaction due to the external heating source, as illustrated in method 100, the exothermic reaction temperature of the respective cell may be greatly reduced (compare FIG. 2A-B to FIG. 3). Therefore, a chance of an extensive exothermic reaction causing a release of fragments and/or a release of flames from battery module 600 may be prevented via the passive control system 414. Stated another way, the passive control system 414 is configured to eliminate, or vastly minimize, an exothermic reaction caused by thermal runaway from an external heating source of a distinct cell (e.g., cell 610) by rapidly discharging the anode-cathode stack 412 to a near-zero state-of-charge. A "near-zero state-of-charge," as referred to herein is below 25% state-of-charge, or more preferable below 15% state-of-charge, or even more preferably below 5% state-of-charge.

In various embodiments the battery module 600 comprises a moat passive control system 620. The moat passive control system 620 comprises a plurality of the cell 610 electrically coupled together. The moat passive control system 620 is configured to create a moat of inert cells in response to one of the cells entering a thermal runaway event due to an external heating source, an internal heat caused by a short circuit, or the like. In this regard, the battery module 600 may be prevented from propagating a thermal runaway event throughout the battery module 600 via the moat passive control system 620. For example, in response to a first cell exceeding a predetermined threshold temperature as described previously herein, the passive control system 414 will automatically, and mechanically, activate and short the cell through the load resistor 416. However, the cell may continue to heat up such that the temperature of an adjacent cell on each side of the first cell may continue to heat up. In response to the adjacent cells exceeding the predetermined threshold temperature as described previously, the adjacent cells will automatically, and mechanically activate the passive control system to short the cell through the load resistor 416. This process may be repeated until the adjacent cells are far enough away from the external heating source so that they do not heat above the predetermined temperature threshold. In this regard, an inert moat of battery cells may be created around the cell exposed to the external heating source, in accordance with various embodiments. Any cell outside the inert moat of battery cells may maintain a temperature below the predetermined temperature threshold during an event, in accordance with various embodiments. In this regard, an exothermic reaction of the entire module 600 or respective battery system may be maintained and have no fragments escape outside of the battery system, in accordance with various embodiments.

Therefore, the battery module 400 is configured to discharge only so many cells as necessary to prevent the propagation of a thermal event, leaving the remainder of the cells to provide power as needed. Thus, in an example embodiment, the battery pack may discharge only a portion of the cells in response to a thermal event in one or more cells of the battery pack.

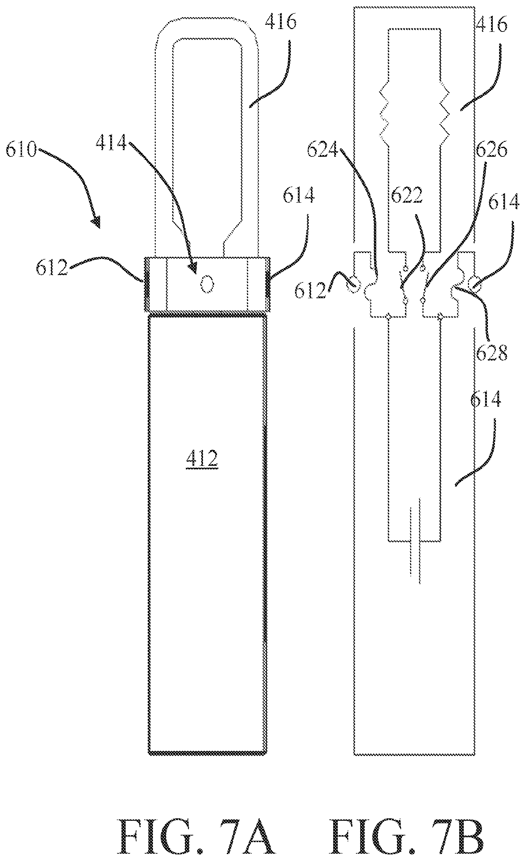

Referring now to FIG. 7A and FIG. 7B, a side view of the cell 610 is illustrated (FIG. 7A) and a schematic view of cell 610 is illustrated (FIG. 7B), in accordance with various embodiments. In various embodiments, the cell 610 comprises a negative terminal 612 and a positive terminal 614. In various embodiments, the anode-cathode stack 412 generates a current that travels from negative terminal 612 to positive terminal 614 due to a voltage across the anode-cathode stack 412. In various embodiments, the passive control system 414 comprises at least one thermal switch 622 and at least one fuse 624. In response to the thermal switch 622 heating above the pre-determined temperature described previously herein, the thermal switch 622 closes, causing current to flood to the load resistor 416. In addition to discharging the anode-cathode stack 412, the closing of thermal switch 622 may also initially allow discharge of current to the load resistor 416 from other cells. However, this current draw from other cells will cause the fuse 624 to open, essentially isolating the cell 610 from a remainder of cells in battery module 600 of FIG. 6. In this regard, a state-of-charge of the cell 610 may be reduced to near-zero in the predetermined period of time. As described previously herein, this may greatly reduce an exothermic reaction of the cell 610 as illustrated in FIGs. 3 compared to FIGS. 2A-B. Although primarily described herein in connection with a 1 cell to 1 load resistor embodiment, in accordance with other example embodiments two or more cells may be connected to a single load resistor.

In various embodiments, the cell 610 may further comprise a second thermal switch 626. In an example embodiment, the second thermal switch 626 provides additional safety benefits to the cell 610. In various embodiments, by having two switches (e.g., thermal switch 622 and second thermal switch 626, the cell voltages may be kept off the load resistor 416, in accordance with various embodiments). In various embodiments, having two switches may also provide an additional level of insulation between the load resistor 416 and the anode-cathode stack 412 during a thermal event, in accordance with various embodiments. However, if only a single switch 622 is used, the switch 626 of Fib 7B would be replaced with a wire connecting the load resistor 416 to a terminal of the anode-cathode stack 412.

In various embodiments, the cell 610 may further comprise a second fuse 628. The second fuse 628 may provide additional safety benefits to the cell 610, in accordance with various embodiments. In various embodiments, by having two fuses (e.g., first fuse 624 and second fuse 628), the system may ensure that if two parts of different cells in the battery module 600 from FIG. 6 became shortened to the module housing in response to multiple cells entering thermal runaway, non-fused shorting from any module to an adjacent module or housing may be avoided.

In various embodiments, the thermal switch 622, 626 may comprise a plastic object coupled to two contacts, the plastic object configured to melt away and allow the two contacts to come in contact in response to the predetermined temperature threshold being met. In various embodiments, the thermal switch 622, 626 may comprise a wax pellet coupled to two contacts, the wax pellet configured to melt away and allow the two contacts to come in contact in response to the predetermined temperature threshold being met.

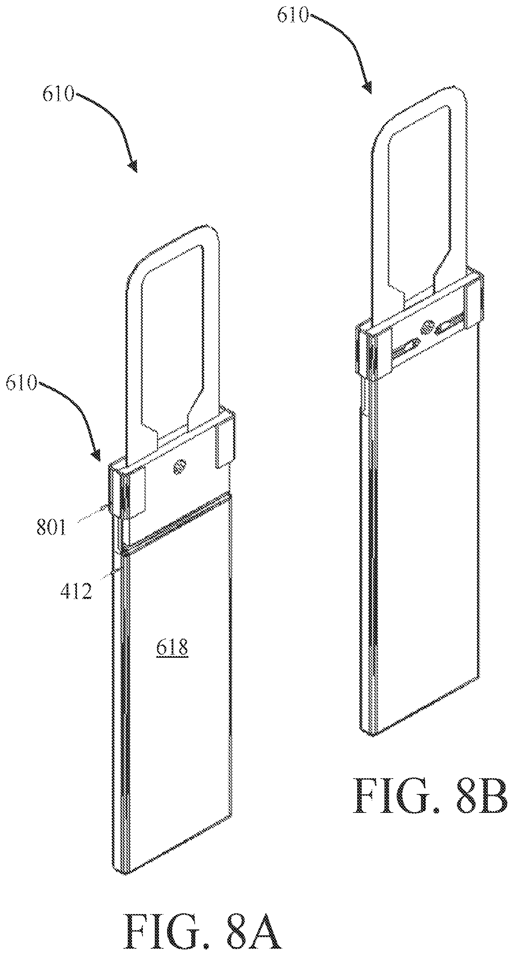

Referring now to FIGs. 8A and 8B, a front perspective view of cell 610 (FIG. 8A) and a back perspective view of cell 610 (FIG. 8B) are illustrated, in accordance with various embodiments. In various embodiments, the passive control system 414 comprises a fused interconnect contact 801 disposed on a first side of the cell housing 618. The fused interconnect contact 801 may include and/or define the negative terminal 612 and the fuse 624 from FIG. 7B. In various embodiments, control block 415 includes the fused interconnect contact 801 disposed external to a control block housing 802, in accordance with various embodiments. In various embodiments, the fused interconnect contact 801 is configured to be electrically coupled to adjacent cells in accordance with cell 610. In various embodiments, on a side opposite the fused interconnect contact 801 may be a second fused interconnect contact including the positive terminal 614 and the fuse 628 from FIG. 7B in accordance with various embodiments.

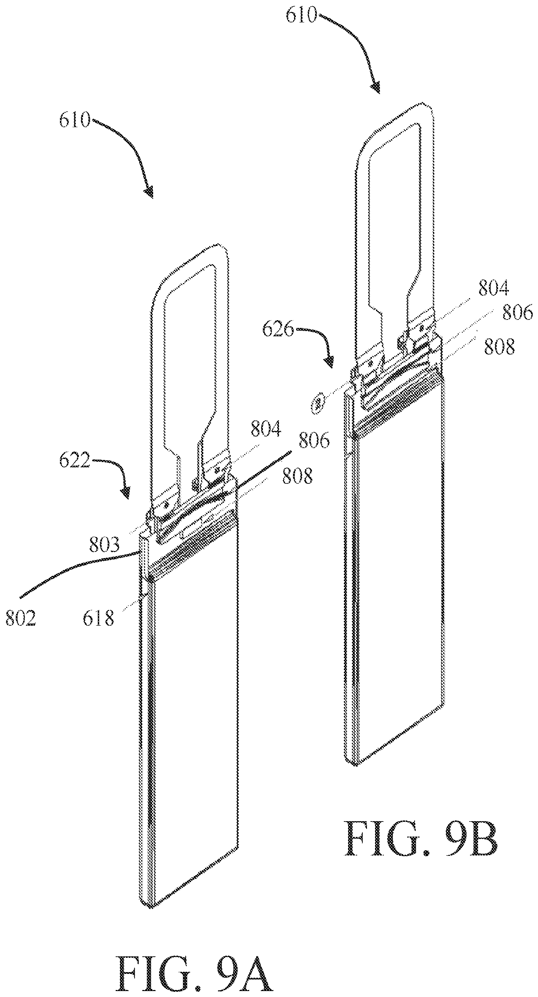

Referring now to FIGs. 9A and 9B, a front perspective view of cell 610 (FIG. 9A) and a back perspective view of cell 610 (FIG. 9B) with a portion of the control block housing 802 removed for clarity are illustrated, in accordance with various embodiments. In various embodiments, the thermal switch 622 comprises a cell tab 803, a load tab 804, a spring slide detent 806, and a thermal actuator 808. In various embodiments, the thermal actuator 808 may comprise a material configured to melt at a predetermined temperature as defined previously herein. For example, a low melt material may comprise a wax material, such as various hard waxes, or a metal alloy such as Roses metal, Cerrosafe, Wood's metal or other similar alloys. Moreover, any suitable low melt material may be used to trigger the thermal switch. In various embodiments, in a first state, the spring slide detent 806 is held in a loaded state by the thermal actuator 808. In this regard, the cell tab 803 and the load tab 804 are not in contact with the spring slide detent 806 in the first state. In various embodiments, in response to the thermal actuator 808 melting, the spring slide detent 806 may transition to a second state. In various embodiments, in the second state, the spring slide detent 806 contacts the cell tab 803 and the load tab 804 and electrically coupling the cell tab 803 to the load tab 804 (i.e., closing the thermal switch 622).

In various embodiments, the back of cell 610 may mirror the front of cell 610 as illustrated in FIG. 9B. Thus, the second thermal switch 626 may also comprise the cell tab 803, the load tab 804, the spring slide detent 806, and the thermal actuator 808. In this regard, the second thermal switch 626 may function in accordance with the thermal switch 622.

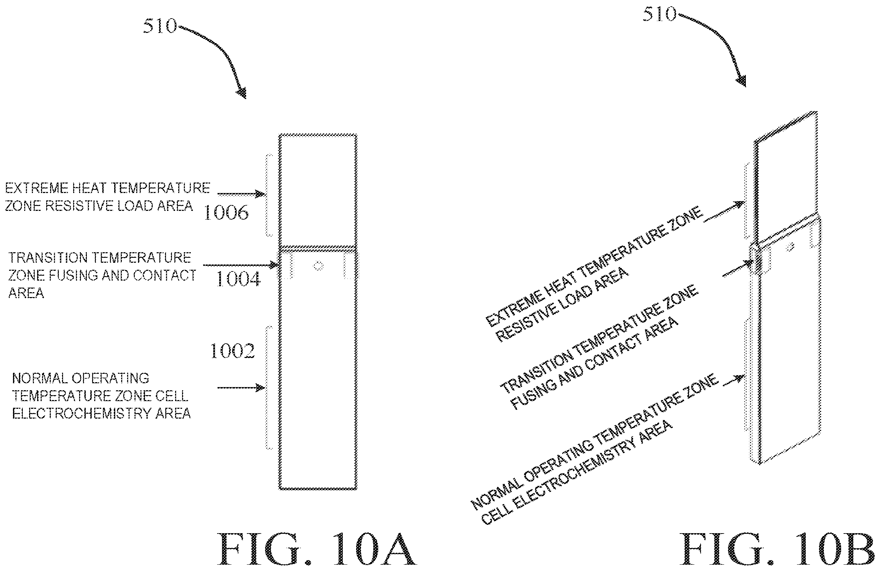

Referring now to FIGs. 10A and 10B, a front view (FIG. 10A) and a perspective view (FIG. 10B), of a cell 510 is illustrated in accordance with various embodiments. In various embodiments, the cell housing 518 may define a first temperature zone 1002, a second temperature zone 1006, and a transition temperature zone 1004. In various embodiments, the first temperature zone 1002 is a normal operating temperature zone for the anode-cathode stack 412 from FIG. 5B. In various embodiments, the second temperature zone 1006 is proximate the load resistor 416 from FIG. 5B, and the transition temperature zone 1004 is disposed proximate the passive control system 414 from FIG. 5B.

In various embodiments, as outlined herein, in response to the thermal switch(es) 622 and/or 626 transition from a first state to a second state (as outlined with respect to FIGs. 9A-B), as the anode-cathode stack 412 is being discharged, energy (potential heat in the first temperature zone) is transferred as heat to the second temperature zone 1006 (e.g., an extreme heat temperature zone) and/or a potential exothermic reaction of the anode-cathode stack 412 is limited, in accordance with various embodiments. Thus, in various embodiments, the passive control system 414 described herein keeps heat from the thermal event away from the anode-cathode stack 412 by transition heat (potential heat in the form of energy stored in the cell) out of the first temperature zone 1002 (e.g., normal operating temperature zone) to the second temperature zone (1006) through discharging the anode-cathode stack 412.

In accordance with an example embodiment, the battery module 600 is configured to keep the heat from the thermal event (including the discharging of the cells) contained within the battery module 600, but away from the cells. Thus, in an example embodiment where the load resistor 416 is enclosed in the pouch, the potential heat from energy stored in the cell is kept in the pouch, but away from the anode cathode stack 412. In other example embodiments, the heat from the thermal event (including heat from the discharging of the cells) is exhausted to a heat sink or other external sink.

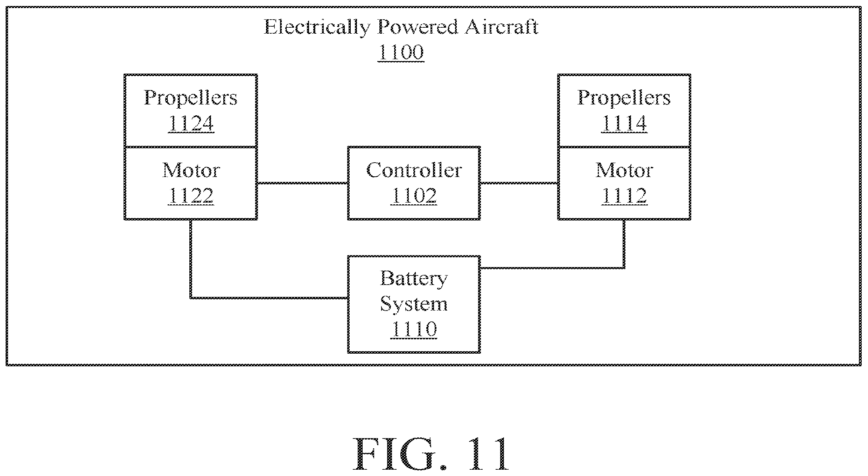

Referring to FIG. 11, a schematic view of an electrically powered aircraft 1100 having a battery system 1110 is illustrated, in accordance with various embodiments. The battery system 1110 comprises at least one battery module 600 from FIG. 6 as described previously herein. In various embodiments, the electrically powered aircraft 1100 comprises a controller 1102, motors 1112, 1122, and propellers 1114, 1124. Each motor 1112, 1122 is operably coupled to a respective propeller 1114, 1124. Each motor 1112, 1122 is electrically coupled to the battery system 1110. In this regard, the battery system 1110 is configured to power the motors 1112, 1122 to drive the respective propellers 1114, 1124 and power the electrically powered aircraft 1100, in accordance with various embodiments. In various embodiments, the controller 1102 is configured to command the motors 1112, 1122 to pull power from the battery system 1110 during operation of the electrically powered aircraft 1100. Although discussed further herein as being configured for an aircraft, the present disclosure is not limited in this regard. For example, the battery system 1110 could be used in other electric vehicles, such as electric cars, electric trucks, electric boats, or the like.

In various embodiments, the battery system 1110 may be configured for use on an aircraft. A battery system 1110, for purposes of this disclosure, includes a plurality of electrically connected cells (e.g., cells 410, cells 510, and/or cells 610 as disclosed previously herein). These electrically connected cells may, in turn, include a parallel, series, or combination of both, collection of electrochemical or electrostatic cells hereafter referred to collectively as "cells", that can be charged electrically to provide a static potential for power or released electrical charge when needed. When cells are assembled into a battery system 1110, the cells are often linked together through metal strips, straps, wires, bus bars, etc., that are welded, soldered, or otherwise fastened to each cell to link them together in the desired configuration.

In various embodiments, the controller 1102 is in operable communication (e.g., wireless or wired) with a motors 1112, 1122. In various embodiments, controller 1102 may be configured as a central network element or hub to access various systems and components of the electrically powered aircraft 1100. Controller 1102 may comprise a network, computer-based system, and/or software components configured to provide an access point to various systems and components of the electrically powered aircraft 1100. In various embodiments, controller 1102 may comprise a processor. In various embodiments, controller 1102 may be implemented in a single processor. In various embodiments, controller 1102 may be implemented as and may include one or more processors and/or one or more tangible, non-transitory memories and be capable of implementing logic. Each processor can be a general purpose processor, a digital signal processor ("DSP"), an application specific integrated circuit ("ASIC"), a field programable gate array ("FPGA") or other programable logic device, discrete gate or transistor logic, discrete hardware components, or any combination thereof. Controller 1102 may comprise a processor configured to implement various logical operations in response to execution of instructions, for example, instructions stored on a non-transitory, tangible, computer-readable medium configured to communicate with controller 1102.

System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se. Stated another way, the meaning of the term "non-transitory computer-readable medium" and "non-transitory computer-readable storage medium" should be construed to exclude only those types of transitory computer-readable media which were found in *In Re Nuijten* to fall outside the scope of patentable subject matter under 35 U.S.C. § 101.

In accordance with an example embodiment, an aircraft comprises a battery configured as described herein to pass the external heating test.

In accordance with an example embodiment, the battery pack is configured such that it can pass the test with external protective devices disconnected. For example, the passive protection may not be provided by any system remote from the cell and/or external of the cell. In another example embodiment, the passive protection system does not comprise a shutdown separator. In fact, a shutdown separator would prevent operation of the passive protection system described herein because it would inert the cell with the energy still stored in the cell. Thus, a shutdown separator would prevent the rapid discharge of the cell to mitigate against thermal runaway.

In accordance with an example embodiment, the battery pack is configured such that it can pass the test without electronic protection systems. For example, the passive protection may not be provided by a control module or battery management system. In another example embodiment, the passive protection system operates without use of field effect transistor (FET's) or any digital switches. In another example embodiment, the passive protection system operates without any signals from sensors, and the battery pack does not monitor any signals for purpose of passing the external heating test.

In accordance with a further example embodiment, the passive protection is provided on a one-to-one basis between the thermal switch and the cell. In another example embodiment, the passive protection is provided on a one-to-one basis between the thermal load and the cell. In other example embodiments, the passive protection system does not discharge a whole module but rather discharges individual cells. Moreover, in an example embodiment, it does so without a central controller.

While the principles of this disclosure have been shown in various embodiments, many modifications of structure, arrangements, proportions, elements, materials, and components (which are particularly adapted for a specific environment and operating requirements) may be used without departing from the principles and scope of this disclosure. These and other changes or modifications are intended to be included within the scope of the present disclosure and may be expressed in the following claims.

The present disclosure has been described with reference to various embodiments. However, one of ordinary skill in the art appreciates that various modifications and changes can be made without departing from the scope of the present disclosure. Accordingly, the specification is to be regarded in an illustrative rather than a restrictive sense, and all such modifications are intended to be included within the scope of the present disclosure. Likewise, benefits, other advantages, and solutions to problems have been described above with regard to various embodiments.

However, benefits, advantages, solutions to problems, and any element(s) that may cause any benefit, advantage, or solution to occur or become more pronounced are not to be construed as a critical, required, or essential feature or element of any or all the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

When language similar to "at least one of A, B, or C" or "at least one of A, B, and C" is used in the claims or specification, the phrase is intended to mean any of the following: (1) at least one of A; (2) at least one of B; (3) at least one of C; (4) at least one of A and at least one of B; (5) at least one of B and at least one of C; (6) at least one of A and at least one of C; or (7) at least one of A, at least one of B, and at least one of C.

## Claims

1. A cell, comprising:
a cell housing;
an anode-cathode stack;
a passive control system comprising a control block, the control block including a thermal switch disposed therein; and
a load resistor isolated thermally from the anode-cathode stack via the control block, wherein the cell housing contains the load resistor, the passive control system, and the anode-cathode stack, wherein the passive control system is configured to discharge the cell to the load resistor in response to an external source of heat being applied to the cell that causes a temperature of the passive control system to exceed a threshold temperature, so as to reduce a state-of-charge of the cell to less than 25%.

2. The cell of claim 1, wherein the thermal switch is integral with the cell.

3. The cell of claim 1, wherein the thermal switch is passive, mechanical, and requires no signal input or external control to switch to cause the discharge.

4. The cell of claim 1, wherein in response to the passive control system being activated, heat generated by the load resistor from rapid discharging of the anode-cathode stack through the load resistor has little to no contribution to heating of the anode-cathode stack from an external heat source or the beginning of a thermal runaway event.

5. The cell of claim 1, wherein the thermal switch is configured to close in response to exceeding a predetermined temperature, and wherein in response to the thermal switch closing, the anode-cathode stack becomes in electrical communication with the load resistor.

6. The cell of claim 5, wherein the predetermined temperature is between 50 °C (122 °F) and 150 °C.

7. A battery module comprising a plurality of the cell of claim **1,** wherein optionally all external safety systems are disconnected from the battery module, and wherein optionally an external application of heat will not trigger a thermal runaway event, and wherein optionally adjacent cells, that are adjacent to a passively protected cell, are protected by reducing the state-of-charge of the passively protected cell to less than 10% state-of-charge.

8. The battery module of claim 7, wherein passive protection from the passive control system is not from a control module or battery management system, and wherein optionally the passive protection of the passive control system is not provided by any system remote from the cell.

9. The battery module of claim 7, wherein passive protection of the passive control system is provided on a one-to-one basis between the thermal switch and the cell, wherein optionally the passive protection of the passive control system does not discharge a whole module but rather discharges individual cells, wherein optionally the passive protection system does not monitor any signals, wherein optionally the passive protection of the passive control system is not provided by digital means, sensors that generate signals, Field Effect Transistors or any digital switches, without a central controller, and wherein optionally the passive protection of the passive control system does not comprise a shutdown separator.

10. The battery module of claim 7, wherein the passive control system is configured to discharge energy in the cell when the cell reaches the threshold temperature in a predetermined amount of time, the predetermined amount of time being between 30 seconds and 3 minutes.

11. The battery module of claim 7, wherein the passive control system is configured to discharge energy in the cell to reduce chance of thermal runaway in adjacent cells due to heat from the cell, and wherein optionally the passive control system is configured to reduce an exothermic reaction by rapidly discharging the cell.

12. A method of protecting adjacent cells from a thermal runaway event in a cell that is adjacent to the adjacent cells, the method comprising:
switching a thermal switch disposed in a control block of a passive control system from a first position to a second position in response to a temperature of the thermal switch being greater than a threshold temperature, the cell including a cell housing that contains a load resistor, the passive control system, and an anode-cathode stack wherein the load resistor (416) is isolated thermally from the anode-cathode stack (412) via the control block (415); and
rapidly discharging power in the cell to the load resistor in response to switching the thermal switch from the first position to the second position.

13. The method of claim 12, wherein rapidly discharging the cell takes the cell from its current state-of-charge to a predetermined state-of-charge.

14. The method of claim 13, wherein the predetermined state-of-charge is less than 25%, and wherein optionally the predetermined state-of-charge is less than 5%.

15. The method of claim 12, wherein the thermal switch is passive, mechanical, and requires no signal input or external control to switch to cause the discharge.

## Patentansprüche

1. Batteriezelle, umfassend:
ein Zellgehäuse,
einen Anoden-Kathoden-Stapel,
ein passives Steuerungssystem, umfassend einen Steuerblock, wobei der Steuerblock einen darin angeordneten Thermoschalter enthält, und
einen Lastwiderstand, der über den Steuerblock thermisch vom Anoden-Kathoden-Stapel isoliert ist, wobei das Zellgehäuse den Lastwiderstand, das passive Steuerungssystem und den Anoden-Kathoden-Stapel enthält, wobei das passive Steuerungssystem dazu beschaffen ist, die Batteriezelle über den Lastwiderstand zu entladen, sobald eine externe Wärmequelle auf die Batteriezelle einwirkt und die Temperatur des passiven Steuerungssystems einen Schwellenwert überschreitet, um den Ladezustand der Batteriezelle auf unter 25 % zu reduzieren.

2. Batteriezelle nach Anspruch 1, wobei der Thermoschalter in die Batteriezelle integriert ist.

3. Batteriezelle nach Anspruch 1, wobei der Thermoschalter passiv und mechanisch ist und zum Schalten und Auslösen der Entladung kein Eingangssignal oder eine externe Steuerung benötigt.

4. Batteriezelle nach Anspruch 1, wobei nach Aktivierung des passiven Regelsystems die durch die schnelle Entladung des Anoden-Kathoden-Stapels über den Lastwiderstand erzeugte Wärme nur geringfügig oder gar nicht zur Erwärmung des Anoden-Kathoden-Stapels durch eine externe Wärmequelle oder den Beginn eines thermischen Durchgehens beiträgt.

5. Batteriezelle nach Anspruch 1, wobei der Thermoschalter dazu beschaffen ist, sich bei Überschreiten einer vorbestimmten Temperatur zu schließen, und wobei der Anoden-Kathoden-Stapel in Reaktion auf das Schließen des Thermoschalters in elektrische Verbindung mit dem Lastwiderstand tritt.

6. Batteriezelle nach Anspruch 5, wobei die vorbestimmte Temperatur zwischen 50 °C (122 °F) und 150 °C.

7. Batteriemodul, umfassend eine Vielzahl von Batteriezellen nach Anspruch 1, wobei optional alle externen Sicherheitssysteme vom Batteriemodul getrennt sind und wobei optional eine externe Wärmezufuhr kein thermisches Durchgehen auslöst, und wobei optional benachbarte Batteriezellen, die an eine passiv geschützte Batteriezelle angrenzen, durch Reduzierung des Ladezustands der passiv geschützten Batteriezelle auf unter 10 % geschützt werden.

8. Batteriemodul nach Anspruch 7, wobei der passive Schutz durch das passive Steuerungssystem nicht von einem Steuermodul oder Batteriemanagementsystem bereitgestellt wird und optional auch nicht von einem System außerhalb der Batteriezelle.

9. Batteriemodul nach Anspruch 7, wobei der passive Schutz des passiven Steuerungssystems eins zu eins zwischen dem Thermoschalter und der Batteriezelle erfolgt, wobei der passive Schutz des passiven Steuerungssystems optional nicht das gesamte Modul, sondern einzelne Batteriezellen entlädt, wobei das passive Schutzsystem optional keine Signale überwacht, wobei der passive Schutz des passiven Steuerungssystems optional nicht durch digitale Mittel, signalerzeugende Sensoren, Feldeffekttransistoren oder digitale Schalter, ohne zentrale Steuerung, realisiert wird und wobei das passive Schutzsystem des passiven Steuerungssystems optional keinen Abschaltseparator umfasst.

10. Batteriemodul nach Anspruch 7, wobei das passive Steuerungssystem dazu beschaffen ist, Energie in der Batteriezelle zu entladen, wenn die Batteriezelle innerhalb einer vorbestimmten Zeitspanne, die zwischen 30 Sekunden und 3 Minuten liegt, die Schwellentemperatur erreicht.

11. Batteriemodul nach Anspruch 7, wobei das passive Steuerungssystem dazu beschaffen ist, Energie in der Batteriezelle zu entladen, um die Gefahr eines thermischen Durchgehens in benachbarten Batteriezellen aufgrund der Zellwärme zu verringern, und wobei das passive Steuerungssystem optional dazu beschaffen ist, eine exotherme Reaktion durch schnelles Entladen der Batteriezelle zu reduzieren.

12. Verfahren zum Schutz benachbarter Batteriezellen vor einem thermischen Durchgehen in einer Batteriezelle, die an die benachbarten Batteriezellen angrenzt, das Verfahren umfassend:
Schalten eines Thermoschalters, der in einem Steuerblock eines passiven Steuerungssystems angeordnet ist, von einer ersten Position in eine zweite Position, wenn die Temperatur des Thermoschalters eine Schwellentemperatur überschreitet, wobei die Batteriezelle ein Zellgehäuse umfasst, die einen Lastwiderstand, das passive Steuerungssystem und einen Anoden-Kathoden-Stapel enthält, wobei der Lastwiderstand (416) über den Steuerblock (415) thermisch vom Anoden-Kathoden-Stapel (412) isoliert ist, und
schnelles Entladen des Stroms in der Batteriezelle an den Lastwiderstand als Reaktion auf das Schalten des Thermoschalters von der ersten Position in die zweite Position.

13. Verfahren nach Anspruch 12, wobei die Batteriezelle durch schnelles Entladen von ihrem aktuellen Ladezustand auf einen vorbestimmten Ladezustand gebracht wird.

14. Verfahren nach Anspruch 13, wobei der vorbestimmte Ladezustand weniger als 25 % beträgt und optional weniger als 5 % beträgt.

15. Verfahren nach Anspruch 12, wobei der Thermoschalter passiv und mechanisch ist und zum Auslösen der Entladung kein Eingangssignal oder eine externe Steuerung benötigt.

## Revendications

1. Une cellule électrochimique, comprenant :
un boîtier de cellule ;
un empilement anode-cathode ;
un système de contrôle passif comprenant un bloc de commande, le bloc de commande comprenant un interrupteur thermique disposé dans celui-ci ; et
une résistance de charge isolée thermiquement de l'empilement anode-cathode via le bloc de commande, dans laquelle le boîtier de la cellule contient la résistance de charge, le système de contrôle passif et l'empilement anode-cathode, dans laquelle le système de contrôle passif est configuré pour décharger la cellule électrochimique vers la résistance de charge en réponse à une source de chaleur externe appliquée à la cellule électrochimique qui amène une température du système de contrôle passif à dépasser une température seuil, de manière à réduire un état de charge de la cellule électrochimique à moins de 25 %.

2. La cellule électrochimique selon la revendication 1, dans laquelle l'interrupteur thermique est intégré à la cellule.

3. La cellule électrochimique de la revendication 1, dans laquelle l'interrupteur thermique est passif, mécanique et ne nécessite aucune entrée de signal ni commande externe pour commuter afin de provoquer la décharge.

4. La cellule électrochimique selon la revendication 1, dans laquelle, en réponse à l'activation du système de contrôle passif, la chaleur générée par la résistance de charge à partir de la décharge rapide de l'empilement d'anodes et de cathodes à travers la résistance de charge contribue peu ou pas du tout à l'échauffement de l'empilement d'anodes et de cathodes à partir d'une source de chaleur externe ou du début d'un événement d'emballement thermique.

5. La cellule électrochimique selon la revendication 1, dans laquelle l'interrupteur thermique est configuré pour se fermer en réponse au dépassement d'une température prédéterminée, et dans laquelle, en réponse à la fermeture de l'interrupteur thermique, l'empilement anode-cathode entre en communication électrique avec la résistance de charge.

6. La cellule électrochimique de la revendication 5, dans laquelle la température prédéterminée est comprise entre 50°C (122°F) et 150°C.

7. Un module de batterie comprenant une pluralité de cellule électrochimiques selon la revendication 1, dans lequel, éventuellement, tous les systèmes de sécurité externes sont déconnectés du module de batterie, et dans lequel, éventuellement, une application externe de chaleur ne déclenchera pas d'événement d'emballement thermique, et dans lequel, éventuellement, les cellules adjacentes, qui sont adjacentes à une cellule électrochimique protégée passivement, sont protégées en réduisant l'état de charge de la cellule électrochimique protégée passivement à moins de 10 % d'état de charge.

8. Le module de batterie de la revendication 7, dans lequel la protection passive du système de contrôle passif ne provient pas d'un module de commande ou d'un système de gestion de batterie, et dans lequel, éventuellement, la protection passive du système de contrôle passif n'est fournie par aucun système distant de la cellule électrochimique.

9. Le module de batterie selon la revendication 7, dans lequel la protection passive du système de contrôle passif est fournie sur une base individuelle entre l'interrupteur thermique et la cellule électrochimique, dans lequel, éventuellement, la protection passive du système de contrôle passif ne décharge pas un module entier mais décharge plutôt des cellule électrochimiques individuelles, dans lequel, éventuellement, le système de protection passif ne surveille aucun signal, dans lequel, éventuellement, la protection passive du système de contrôle passif n'est pas fournie par des moyens numériques, des capteurs qui génèrent des signaux, des transistors à effet de champ ou des commutateurs numériques, sans contrôleur central, et dans lequel, éventuellement, la protection passive du système de contrôle passif ne comprend pas de séparateur d'arrêt.

10. Le module de batterie selon la revendication 7, dans lequel le système de contrôle passif est configuré pour décharger de l'énergie dans la cellule lorsque la cellule atteint la température seuil dans un laps de temps prédéterminé, le laps de temps prédéterminé étant compris entre 30 secondes et 3 minutes.

11. Le module de batterie selon la revendication 7, dans lequel le système de contrôle passif est configuré pour décharger de l'énergie dans la cellule électrochimique afin de réduire le risque d'emballement thermique dans les cellules adjacentes en raison de la chaleur provenant de la cellule, et dans lequel, éventuellement, le système de contrôle passif est configuré pour réduire une réaction exothermique en déchargeant rapidement la cellule.

12. Procédé de protection des cellule électrochimiques adjacentes contre un événement d'emballement thermique dans une cellule adjacente aux cellules électrochimiques adjacentes, le procédé comprenant :
la commutation d'un interrupteur thermique disposé dans un bloc de commande d'un système de contrôle passif d'une première position à une seconde position en réponse à une température de l'interrupteur thermique supérieure à une température seuil, la cellule électrochimique comprenant un boîtier de cellule qui contient une résistance de charge, le système de contrôle passif, et un empilement d'anodes et de cathodes dans lequel la résistance de charge (416) est isolée thermiquement de l'empilement d'anodes et de cathodes (412) via le bloc de commande (415) ; et l'étape consistant à :
décharger rapidement l'énergie dans la cellule vers la résistance de charge en réponse à la commutation de l'interrupteur thermique de la première position à la seconde position.

13. Procédé selon la revendication 12, dans lequel la décharge rapide de la cellule électrochimique amène la cellule de son état de charge actuel à un état de charge prédéterminé.

14. Procédé selon la revendication 13, dans lequel l'état de charge prédéterminé est inférieur à 25 %, et dans lequel éventuellement l'état de charge prédéterminé est inférieur à 5°%.

15. Procédé selon la revendication 12, dans lequel l'interrupteur thermique est passif, mécanique et ne nécessite aucune entrée de signal ni commande externe pour commuter afin de provoquer la décharge.
